# EUROPÄISCHE PATENTANMELDUNG

(11) **EP 4 737 863 A1**
(43) Veröffentlichungstag der Anmeldung: **06.05.2026**
(21) Anmeldenummer: 25211062.2
(22) Anmeldetag: 24.10.2025
(51) Int. Cl.: G01D 5/347

(54) **VORRICHTUNG UND VERFAHREN ZUR BESTIMMUNG EINER POSITION**

(30) Priorität: 29.10.2024 DE 102024131596
(71) Anmelder: Pepperl+Fuchs SE, 68307 Mannheim (DE)
(72) Erfinder: HORNBERGER, Armin, 68307 Mannheim (DE)
(74) Vertreter: Tergau & Walkenhorst Intellectual Property GmbH

(57) **Zusammenfassung**

Gemäß der Erfindung umfasst eine Vorrichtung (1) zur Bestimmung einer Position eines Data Matrix Codes (DMC) (16) relativ zu einem Bezugspunkt (8), umfassend
• ein Sensormodul (2), eingerichtet zum Erfassen von Daten eines DMC (16) in dessen Sichtfeld (4),
• eine Verarbeitungseinheit eingerichtet zur Bestimmung einer Position des DMC (16) relativ zu dem Bezugspunkt (8),
• eine Kommunikationsschnittstelle eingerichtet zum Übertragen von Daten des DMC (16) und/oder der bestimmten Position des DMC (16) an eine externe Einheit,
• ein Positionsbestimmungssystem (12), umfassend
∘ den Bezugspunkt (8),
∘ eine Längsverstelleinrichtung (10) mit einem Längsverstellelement (14), die dazu eingerichtet ist, eine Bewegung entlang einer Bahn mittels des Längsverstellelements (14), ausgehend von dem Bezugspunkt (8), vorzugeben, und
∘ eine Vielzahl von DMC (16), die entlang des Längsverstellelements (14) so angeordnet sind, dass sie bei Bewegung des Längsverstellelements (14) jeweils in das Sichtfeld (4) des Sensormoduls (2) gelangen können und dort auslesbar sind,
wobei das Sensormodul (2) und ein bewegbares Ende des Längsverstellelementes (14) entlang derselben Bewegungsbahn bewegbar sind und sich dadurch stets in derselben relativen Position zueinander befinden.

Darüber hinaus wird ein entsprechendes Verfahren zur Bestimmung einer Position eines Data Matrix Codes (DMC) (16) relativ zu einem Bezugspunkt (8) offenbart.

## Beschreibung

### Technisches Gebiet

Die vorliegende Erfindung betrifft eine Vorrichtung zur Bestimmung einer Position eines Data Matrix Codes (DMC) relativ zu einem Bezugspunkt und ein Verfahren zur Bestimmung einer Position eines Data Matrix Codes (DMC) relativ zu einem Bezugspunkt, sowie eine Hubeinrichtung umfassend eine Vorrichtung zur Bestimmung einer Position eines Data Matrix Codes (DMC) relativ zu einem Bezugspunkt.

### Hintergrund

In verschiedenen industriellen Anwendungen ist die präzise Bestimmung der Position eines Objekts relativ zu einem definierten Weg von entscheidender Bedeutung für die Effizienz und Zuverlässigkeit des industriellen Prozesses. Die Genauigkeit dieser Positionsbestimmung beeinflusst maßgeblich die Qualität und Sicherheit der gesamten Prozesskette. Daher besteht ein kontinuierlicher Bedarf an der Weiterentwicklung und Verbesserung der Technologien, die zur präzisen Erfassung dieser relativen Position eingesetzt werden.

Im Stand der Technik werden beispielsweise Detektoren oder Kameras zur Erfassung und Überwachung der Position von Objekten eingesetzt. Kommt es jedoch zu Fehlfunktionen bei diesen Geräten, wie etwa Bildausfällen oder Softwarefehlern, kann dies zu erheblichen Problemen führen, die die Betriebssicherheit gefährden und zu Schäden an der Ausrüstung oder dem Endprodukt führen können.

Ein Ansatz zur Verbesserung der Zuverlässigkeit besteht darin, einen zweiten Detektor oder eine zweite Kamera zu integrieren, die zur Überprüfung der Funktionstüchtigkeit des ersten Detektors oder der ersten Kamera dient. Diese redundanten Systeme können Fehlfunktionen erkennen und so dazu beitragen, Fehler bei der Positionsbestimmung frühzeitig zu identifizieren und zu beheben.

Jedoch sind diese redundanten Systeme oft mit erheblichen Kosten und einem hohen Montageaufwand verbunden. Der zusätzliche Platzbedarf und die erhöhten

Kosten für zusätzliche Detektoren oder Kameras stellen eine signifikante Herausforderung dar.

Eine alternative Lösung zur Verbesserung der Zuverlässigkeit und Reduzierung der Kosten ist die Verwendung mechanischer Systeme. Diese Systeme messen die Position von beweglichen Komponenten durch die Erfassung von mechanischen Parametern wie Seillängen oder Schiebepositionen. Ein solches mechanisches System bietet eine kostengünstige und platzsparende Möglichkeit zur präzisen Positionsbestimmung. Da das mechanische System direkt mit der Bewegung der Komponente gekoppelt ist, kann es Fehler schnell erkennen und so die Genauigkeit der Positionserfassung sicherstellen, ohne die Kosten und den Platzbedarf von redundanten Detektoren oder Kameras.

Im Zusammenhang mit Hubtischen bietet der Einsatz von Seilzuggebern im Stand der Technik eine effiziente und kostengünstige Lösung zur präzisen Positionsbestimmung. Diese mechanischen Systeme messen die Position des Hubtischs durch die Erfassung der Seillänge, die sich bei der Bewegung des Tisches ändert. Der Vorteil liegt in der Reduzierung von Kosten und Platzbedarf im Vergleich zu komplexeren, redundanten Systemen wie zusätzlichen Detektoren oder Kameras. Der Seilzuggeber ermöglicht eine direkte und unmittelbare Rückmeldung zur Tischposition, wodurch die Genauigkeit der Positionsmessung erhöht und potenzielle Fehler frühzeitig erkannt werden können.

Obwohl Seilzuggeber in vielen Anwendungen wie Scherenhubtischen und ähnlichem weit verbreitet sind, weisen sie einige signifikante Nachteile auf. Ein wesentlicher Nachteil ist die Notwendigkeit, zwei redundante Seilzuggeber oder alternative redundante Systeme einzusetzen, um die Sicherheit und Zuverlässigkeit zu gewährleisten.

Die mechanische Anfälligkeit der Seilzüge ist ebenfalls ein Problem, da sie leicht beschädigt werden können, was zu Fehlmessungen und damit zu potenziellen Sicherheitsrisiken führen kann.

Zudem ist der Erreichungsgrad der Seilzuggeber auf Sicherheitslevel SIL2 (Safety Integrity Level 2, welches eine Klassifizierung für sicherheitsrelevante Systeme nach IEC 61508 ist) und PLd (PLd ist eine Sicherheitsstufe nach ISO 13849-1) begrenzt, was für viele sicherheitskritische Anwendungen möglicherweise nicht ausreichend ist.

Ein weiteres Problem ist, dass der Seilzuggeber aufgrund der erforderlichen Messgenauigkeit nur einlagig aufgewickelt werden darf, was aufwändige Mechaniken zur Vermeidung von Verklemmungen beim Auf- oder Abwickeln des Seils erfordert. Darüber hinaus ist die maximale Seillänge und damit der Messbereich stark eingeschränkt, was die Flexibilität und die Einsatzmöglichkeiten des Systems begrenzt.

### Zusammenfassende Beschreibung der Erfindung

Es ist deshalb eine der vorliegenden Erfindung zu Grunde liegende Aufgabe die Nachteile solcher Positionsbestimmungsvorrichtungen im Stand der Technik zu überwinden. Insbesondere ist es eine der vorliegenden Erfindung zu Grunde liegende Aufgabe, eine Vorrichtung zur Bestimmung einer Position eines Data Matrix Codes (DMC) relativ zu einem Bezugspunkt bereitzustellen, welche weniger stör- und fehleranfällig ist.

Diese und andere Probleme werden durch den Gegenstand der beigefügten unabhängigen Ansprüche gelöst.

Bevorzugte Ausführungsformen können den abhängigen Ansprüchen entnommen werden und darüber hinaus aus der folgenden Beschreibung, insbesondere unter Berücksichtigung verschiedener Ausführungsformen, wie sie in den beigefügten Ansprüchen behandelt und beschrieben sind.

Die Ausführungsformen, Merkmale und Kombinationen von Merkmalen, wie sie hier in Verbindung mit der Erfindung beschrieben werden, sowie die Kombination von Merkmalen, wie sie in den beigefügten Ansprüchen angegeben sind, aber auch jede Kombination von Merkmalen, wie sie in Verbindung mit den Ausführungsformen erwähnt und beschrieben wird, gelten als hierin offenbart, zumindest jedoch als durch einen Fachmann herleitbar. Insbesondere kann jedes Merkmal und jede Kombination von Merkmalen in den hier beschriebenen Ausführungsformen beispielsweise in einer anderen Kombination, insbesondere in einer anderen Anspruchskategorie, beansprucht werden, mindestens weil die fachkundige Person erkennen wird, dass jede einzelne Kombination der hier genannten Merkmale geeignet ist, zur Lösung des zugrunde liegenden Problems beizutragen.

Des Weiteren können jedes Merkmal und jede Kombination von Merkmalen in den Ansprüchen und in der untenstehenden Beschreibung unabhängig von dem jeweils beanspruchten Gegenstand, unabhängig von Anspruchsabhängigkeiten und Rückverweisen sowie unabhängig von der Anspruchskategorie, in der das Merkmal beansprucht wird, verwendet und separat beansprucht werden. Beispielsweise kann in einer willkürlichen Kombination, die aus einem oder mehreren Ansprüchen ausgewählt ist, eine oder mehrere Ausführungsformen gemäß der untenstehenden Beschreibung und/oder den beigefügten Abbildungen vorgesehen sein.

Erfindungsgemäß wird die Aufgabe durch eine Vorrichtung nach Anspruch 1 und ein Verfahren mit den in Anspruch 14 angegebenen Schritten gelöst.

Die oben beschriebenen Aufgaben werden erfindungsgemäß durch Vorrichtung zur Bestimmung einer Position eines Data Matrix Codes (DMC) relativ zu einem Bezugspunkt gelöst, umfassend:
- ein Sensormodul (2), eingerichtet zum Erfassen von Daten eines DMC (16) in dessen Sichtfeld (4),
- eine Verarbeitungseinheit eingerichtet zur Bestimmung einer Position des DMC (16) relativ zu dem Bezugspunkt (8),
- eine Kommunikationsschnittstelle eingerichtet zum Übertragen von Daten des DMC (16) und/oder der bestimmten Position des DMC (16) an eine externe Einheit,
- ein Positionsbestimmungssystem (12), umfassend
   ∘ den Bezugspunkt (8),
   ∘ eine Längsverstelleinrichtung (10) mit einem Längsverstellelement (14), die dazu eingerichtet ist, eine Bewegung entlang einer Bahn mittels des Längsverstellelements (14), ausgehend von dem Bezugspunkt (8), vorzugeben, und
   ∘ eine Vielzahl von DMC (16), die entlang des Längsverstellelements (14) so angeordnet sind, dass sie bei Bewegung des Längsverstellelements (14) jeweils in das Sichtfeld (4) des Sensormoduls (2) gelangen können und dort auslesbar sind,
wobei das Sensormodul (2) und ein bewegbares Ende des Längsverstellelementes (14) entlang derselben Bewegungsbahn bewegbar sind und sich dadurch stets in derselben relativen Position zueinander befinden.

Die erfindungsgemäße Vorrichtung bietet im Vergleich zu dem Stand der Technik mehrere Vorteile. Das Sensormodul kann Daten aus einem Data Matrix Code (DMC) mit hoher Genauigkeit auslesen und verschiedene Arten von DMCs, einschließlich mehrfarbiger Codes, erfassen. Im Gegensatz dazu messen beispielsweise Drehgeber hauptsächlich die Drehbewegung einer Welle und sind auf die Messung von Winkelpositionen und Rotationsgeschwindigkeiten beschränkt.

Die Verarbeitungseinheit des Sensormoduls analysiert zudem die erfassten Daten und bestimmt die Position des DMC relativ zu einem Bezugspunkt. Zusätzlich enthält der Sensor des Sensormoduls einen Algorithmus zur Überprüfung der Plausibilität der erfassten Daten, was die Zuverlässigkeit erhöht.

Die Kommunikationsschnittstelle des Sensormoduls ermöglicht die Übertragung der erfassten Daten und Positionen an externe Systeme, somit ist keine zusätzliche Hardware zur Datenübertragung notwendig.

Das Sensormodul verfügt über ein Mehrfarben-Beleuchtungssystem, das mehrfarbige Codes sichtbar und lesbar macht, und eine integrierte Beleuchtungseinheit, die auch bei schlechten Lichtverhältnissen eine zuverlässige Datenerfassung ermöglicht. Hierdurch werden Fehler vermieden und die Störanfälligkeit maximal verringert.

Ein Data Matrix Code (DMC) ist ein zweidimensionaler Barcode, der entwickelt wurde, um auf kleinstem Raum eine große Menge an Informationen zu speichern. Er besteht aus einer Anordnung von schwarzen und weißen Zellen, die in einem quadratischen oder rechteckigen Raster angeordnet sind. Diese Zellen repräsentieren binäre Daten, die von speziellen Lesegeräten oder Kameras ausgelesen werden können.

Als Kommunikationsschnittstelle können verschiedene Kommunikationsschnittstellen verwendet werden, um Daten und/oder die bestimmte Position eines DMC von dem Sensormodul und/oder der Verarbeitungseinheit an eine externe Steuer- und/oder Überwachungseinheit zu übertragen. Zu den möglichen Schnittstellen gehören Ethernet, das für hohe Datenübertragungsraten und Zuverlässigkeit bekannt ist, sowie serielle Schnittstellen wie RS-232 und RS-485, die häufig in industriellen Anwendungen verwendet werden. USB stellt eine universelle Schnittstelle zur Datenübertragung dar. Der CAN-Bus ist ein robustes Kommunikationssystem, das in der Automobilindustrie und in industriellen Anwendungen eingesetzt wird. Drahtlose Kommunikationsschnittstellen wie WLAN und Bluetooth bieten Flexibilität und Mobilität, insbesondere in Umgebungen, in denen Kabelverbindungen unpraktisch sind. Profinet und Profibus sind industrielle Kommunikationsprotokolle, die speziell für die Automatisierungstechnik entwickelt wurden und eine hohe Zuverlässigkeit und Echtzeitfähigkeit bieten.

Als Verarbeitungseinheit für die Vorrichtung zur Bestimmung einer Position eines Data Matrix Codes (DMC) relativ zu einem Bezugspunkt können verschiedene Arten von Hardware und Software verwendet werden. Ein Beispiel hierfür ist ein Mikrocontroller.

Der Bezugspunkt kann am unteren, feststehenden Ende eines Hubtisches liegen und durch ein Ende der Längsverstelleinrichtung definiert sein. Das andere Ende der Längsverstelleinrichtung kann am beweglichen Teil des Hubtisches angebracht sein, um durch das Ausfahren oder Einfahren des Hubtisches das Ausfahren oder Einfahren des Längsverstellelementes zu bewirken. Durch diese Bewegung wird ein DMC nach dem anderen am Sensorelement bzw. dessen Sichtfeld vorbeigeführt und ausgelesen.

Die Verarbeitungseinheit analysiert die erfassten Daten der DMCs und berechnet daraus die Position der DMCs relativ zu dem Bezugspunkt, indem sie beispielsweise die Höhe des DMCs, die in den Daten des DMCs hinterlegt sein kann, ermittelt und von dieser die Höhe des Bezugspunktes abzieht, sodass die Ausfahrhöhe des Hubtisches berechnet wird.

Dies kann beispielsweise genutzt werden, um ein Warnsignal zu erzeugen, sobald der Hubtisch eine Mindestausfahrhöhe erreicht, die notwendig ist, um Menschen oder Gegenstände unter diesem nicht zu gefährden.

Darüber hinaus gibt jeder DMC (Data Matrix Code) eine genaue Position an, was die Präzision der Positionsbestimmung erheblich erhöht. Durch die Vielzahl der DMCs stehen mehrere Referenzpunkte zur Verfügung, was die Zuverlässigkeit und Genauigkeit der Messungen signifikant verbessert.

Falls ein DMC beschädigt oder unlesbar ist, können andere DMCs als Data Matrix Codes (DMC) dienen, was die Robustheit des Systems deutlich erhöht.

Die Position kann schnell und effizient durch das Auslesen der DMCs bestimmt werden, was zu einer erheblichen Zeitersparnis führt. Darüber hinaus ermöglicht die Verwendung mehrerer DMCs eine kontinuierliche Überwachung und Anpassung der Position, was besonders in dynamischen Umgebungen von Vorteil ist.

Um maximale Sicherheitsanforderungen zu genügen, kann in einer Ausführungsform der Vorrichtung zur Bestimmung einer Position eines Data Matrix Codes (DMC) relativ zu einem Bezugspunkt die Vorrichtung eine Sicherheitsstufe aufweisen, die durch eine Sicherheitsintegritätsstufe (SIL) mit einer Wahrscheinlichkeit eines gefährlichen Ausfalls pro Stunde (*PFH_{D}*) zwischen 10⁻⁷und 10⁻⁸ gekennzeichnet ist und/oder die durch ein Performance Level (PL) mit einer Wahrscheinlichkeit eines gefährlichen Ausfalls pro Stunde (*PFH_{D}*) zwischen 10⁻⁷ und 10⁻⁸ gekennzeichnet ist.

Sicherheitsintegritätsstufen (SIL) und Performance Levels (PL) sind Konzepte in der funktionalen Sicherheit, die zur Bewertung und Klassifizierung der Zuverlässigkeit sicherheitskritischer Systeme dienen.

Die Sicherheitsintegritätsstufe (SIL), definiert durch die Norm IEC 61508, gibt an, mit welcher Wahrscheinlichkeit ein sicherheitsrelevantes System im Bedarfsfall korrekt funktioniert und ein bestimmtes Risikoniveau erreicht.

Das Performance Level (PL) gemäß der Norm ISO 13849-1 beschreibt die Sicherheitsleistung von Steuerungssystemen, insbesondere in Maschinen und Anlagen, und klassifiziert die Wahrscheinlichkeit eines gefahrbringenden Versagens. Beide Konzepte tragen dazu bei, Risiken in sicherheitskritischen Anwendungen zu minimieren und bieten eine standardisierte Grundlage für die Sicherheitsanforderungen in verschiedenen technischen Bereichen.

Die Wahrscheinlichkeit eines gefährlichen Ausfalls pro Stunde (*PFH_{D}*) ist ein Parameter in der funktionalen Sicherheit, der zur Bewertung der Zuverlässigkeit sicherheitskritischer Systeme herangezogen wird. *PFH_{D}* gibt an, wie häufig ein sicherheitsrelevantes System pro Stunde einen gefährlichen Ausfall erleiden kann. Dieser Wert spielt eine zentrale Rolle bei der Bestimmung der Sicherheitsintegritätsstufen (SIL) gemäß der Norm IEC 61508 und ist ein wichtiger Faktor bei der Festlegung des Performance Levels (PL) gemäß der Norm ISO 13849-1. Beide Konzepte - SIL und PL - nutzen *PFH_{D}* , um sicherzustellen, dass die Risiken in sicherheitskritischen Anwendungen effektiv minimiert werden und die Systeme die erforderlichen Sicherheitsanforderungen in unterschiedlichen Branchen und Anwendungen erfüllen.

Durch die angegebene Sicherheitsstufe erreicht die Vorrichtung sowohl die Sicherheitsintegritätsstufe SIL 3 als auch das Performance Level PLe. Eine Sicherheitsintegritätsstufe (SIL) mit einer Wahrscheinlichkeit eines gefährlichen Ausfalls pro Stunde (*PFH_{D}*) zwischen 10⁻⁷ und 10⁻⁸ erfüllt die Anforderungen für SIL 3 gemäß der Norm IEC 61508, was bedeutet, dass das System eine sehr hohe Zuverlässigkeit in sicherheitskritischen Anwendungen bietet. Gleichzeitig wird ein Performance Level (PL) mit einer Wahrscheinlichkeit eines gefährlichen Ausfalls pro Stunde (*PFH_{D}*) im gleichen Bereich zwischen 10⁻⁷ und 10⁻⁸ erreicht, was den höchsten Sicherheitsgrad PLe gemäß der Norm ISO 13849-1 darstellt.

Diese Werte zeigen, dass die Vorrichtung sowohl den höchsten Performance Level als auch eine sehr hohe Sicherheitsintegrität gewährleistet, was sie für Anwendungen geeignet macht, in denen maximale Sicherheitsanforderungen bestehen.

Durch das Erreichen der Sicherheitsintegritätsstufe SIL 3 und/oder des Performance Levels PLe wird eine äußerst geringe Wahrscheinlichkeit eines gefährlichen Ausfalls, mit einem *PFH_{D}* zwischen 10⁻⁷ und 10⁻⁸ pro Stunde sichergestellt. Dies bedeutet, dass die Vorrichtung in der Lage ist, auch unter extremen Bedingungen zuverlässig zu funktionieren und potenzielle Risiken für Mensch und Maschine zu minimieren.

Zudem bietet die Erfüllung beider Sicherheitsstufen Flexibilität bei der Integration in bestehende Systeme und gewährleistet Compliance mit internationalen Normen, was die Akzeptanz und den Einsatz an verschiedenen Orten und Einsätzen erleichtert.

Durch die hohe Zuverlässigkeit und Sicherheit, die SIL 3 und PLe bieten, wird die Ausfallwahrscheinlichkeit minimiert, was zu weniger Stillstandzeiten, geringeren Wartungskosten und einer insgesamt höheren Betriebssicherheit führt.

In einer Ausführungsform der Erfindung kann die Längsverstelleinrichtung in der Vorrichtung zur Bestimmung einer Position eines Data Matrix Codes (DMC) relativ zu einem Bezugspunkt ein Gurtsystem sein, welches als Längsverstellelement einen Gurt umfasst.

Gurtsysteme können sicher und fest fixiert werden, was die Zuverlässigkeit und Sicherheit in der spezifischen Anwendung erhöht. Die einfache Handhabung und die Möglichkeit, sie schnell und unkompliziert einzustellen, erschließen viele Einsatzfelder. Schließlich sind Gurtsysteme in der Regel leicht, was die Handhabung und Installation erleichtert.

Darüber hinaus sind Gurtsysteme oft kosteneffizient und wartungsarm, was sie zu einer wirtschaftlichen Wahl macht.

Das Gurtsystem kann darüber hinaus eine Aufrollmechanik aufweisen, die eine Trommel oder einen Spulenkern umfassen kann, auf dem der Gurt aufgewickelt ist. Eine Abwickelvorrichtung kann des Weiteren die kontrollierte Abwicklung des Gurtes garantieren. Ferner kann ein Sperrmechanismus oder eine Rückhaltevorrichtung vorgesehen sein, die den Gurt im Falle einer plötzlichen Bewegung blockiert, um die Sicherheit zu gewährleisten.

Das Gurtsystem kann zusätzlich Führungselemente und Umlenkrollen aufweisen, welche die Führung des Gurtes optimieren und dessen Spannung regulieren. Schließlich können Verankerungspunkte oder Befestigungsmechanismen zum Gurtsystem gehören, die sicherstellen, dass das System fest an der Abwickelvorrichtung oder einer anderen Haltestruktur fixiert ist.

Um eine einfache Beschaffung der Materialien zu gewährleisten, wird vorgeschlagen, dass das Längsverstellelement der Vorrichtung zur Bestimmung einer Position eines Data Matrix Codes (DMC) relativ zu einem Bezugspunkt im Wesentlichen Metall oder Kunststoff umfasst.

Hierzu eignen sich bestimmte Metalle und Kunststoffe, die den Anforderungen dieser Anwendung an Festigkeit, Flexibilität und Haltbarkeit entsprechen. Ein geeignetes Metall für den Gurt ist beispielsweise Edelstahl. Edelstahl ist korrosionsbeständig, eignet sich besonders für Anwendungen, die eine lange Lebensdauer und Widerstandsfähigkeit gegen Umwelteinflüsse erfordern. Alternativ könnte auch Aluminium verwendet werden, da es leicht und dennoch stabil ist, wodurch das Gewicht der gesamten Vorrichtung reduziert wird, ohne die strukturelle Integrität zu beeinträchtigen.

Darüber hinaus eignet sich ein Kunststoff wie Polyester oder Nylon. Diese Kunststoffe sind besonders reißfest, abriebfest und beständig gegen verschiedene Chemikalien und UV-Strahlung. Polyester bietet den Vorteil einer hohen Zugfestigkeit und Dehnungsbeständigkeit, was bedeutet, dass der Gurt auch bei häufiger Beanspruchung seine Form und Festigkeit behält. Nylon ist bekannt für seine hervorragende Belastbarkeit und Flexibilität und zeigt eine hohe Widerstandsfähigkeit gegenüber mechanischer Beanspruchung, was es ideal für Anwendungen macht, bei denen der Gurt häufig auf- und abgewickelt wird. Beide Materialien haben zudem eine geringe Feuchtigkeitsaufnahme, was eine Degradation durch Witterungseinflüsse minimiert, und die Lebensdauer des Gurts verlängert.

In einer Ausführungsform der Erfindung kann die Längsverstelleinrichtung mit einem Längsverstellelement dazu eingerichtet sein, eine Bewegung entlang einer kurvilinearen und/ oder linearen Bahn mittels des Längsverstellelements, ausgehend von dem Bezugspunkt, vorzugeben.

Dies ermöglicht eine besonders flexible und anwendungsspezifische Anpassung der Bewegungsführung relativ zum Bezugspunkt. Dadurch kann die Vorrichtung nicht nur in linearen Achssystemen, sondern auch in komplexeren Geometrien wie gekrümmten Führungspfaden oder segmentierten Anlagen eingesetzt werden. Dies erweitert den Einsatzbereich, insbesondere in räumlich begrenzten oder nichtlinearen Produktionsumgebungen

Die Vielzahl der Data Matrix Codes kann in einer Ausführungsform der Erfindung auf das Längsverstellelement der Vorrichtung zur Bestimmung einer Position eines Data Matrix Codes (DMC) relativ zu einem Bezugspunkt aufgedruckt oder aufgelasert oder aufgeklebt sein.

Das Aufkleben bietet Flexibilität, da die Aufkleber auf verschiedenen Materialien und Oberflächen angebracht werden können. Zudem ist der Prozess des Aufklebens relativ einfach und erfordert keine speziellen Geräte, was ihn besonders praktisch macht. Ein weiterer Vorteil ist die Austauschbarkeit, da Aufkleber bei Bedarf leicht entfernt und ersetzt werden können.

Das Auflasern hingegen zeichnet sich durch seine Langlebigkeit aus. Gelaserte Codes sind sehr widerstandsfähig gegen Abnutzung, Chemikalien und Umwelteinflüsse, was sie besonders haltbar macht. Die Lasertechnologie ermöglicht zudem sehr präzise und detaillierte Markierungen, was die Genauigkeit erhöht. Ein weiterer Vorteil ist die Fälschungssicherheit, da gelaserte Codes schwer zu fälschen oder zu manipulieren sind.

Das Aufdrucken schließlich ist in der Regel kosteneffizienter als das Lasern und der Druckprozess ist schnell, was ihn gut für die Massenproduktion geeignet macht. Drucktechniken können auf verschiedenen Materialien angewendet werden und bieten eine hohe Flexibilität in der Gestaltung.

In einer weiteren Ausführungsform der Erfindung kann die Verarbeitungseinheit der Vorrichtung zur Bestimmung einer Position eines Data Matrix Codes (DMC) relativ zu einem Bezugspunkt ein sicheres Übertragungsprotokoll wie Fail Safe o-ver EtherCAT (FSoE) und/ oder PROFIsafe unterstützen.

EtherCAT FSoE (Fail Safe over EtherCAT) ist eine Erweiterung des EtherCAT-Protokolls, das eine sichere Übertragung von sicherheitskritischen Daten in Echtzeit ermöglicht. Es wir hierbei EtherCAT mit zusätzlichen Sicherheitsfunktionen kombiniert, wie Prüfsummen und Überwachungsmechanismen. Dadurch wird gewährleistet, dass sicherheitsrelevante Geräte wie Sensoren und Steuerungen Daten zuverlässig austauschen und im Falle eines Fehlers in einen sicheren Zustand versetzt werden können.

PROFIsafe ist ein sicherheitsgerichtetes Kommunikationsprotokoll, das auf dem industriellen Feldbusstandard PROFINET (für Ethernet-basierte Netzwerke) und PROFIBUS (für serielle Netzwerke) basiert. Es ermöglicht die sichere Übertragung von Daten zwischen sicherheitsrelevanten Geräten in Echtzeit. PROFIsafe fügt zusätzliche Sicherheitsmechanismen wie Fehlererkennungscodes, Sequenznummern und Watchdog-Zähler hinzu, um die Integrität und Verlässlichkeit der Daten zu gewährleisten.

Hierdurch wird die Sicherheit, da beide Protokolle die sichere Übertragung von sicherheitsrelevanten Daten gewährleisten und somit das Risiko von Fehlern und Unfällen minimieren. Der Verdrahtungsaufwand wird reduziert, da durch die Nutzung eines einzigen Kommunikationskabels für sowohl Standard- als auch Sicherheitsdaten der Verdrahtungsaufwand erheblich verringert wird.

Darüber hinaus bieten die Protokolle eine hohe Flexibilität, da sie eine flexible Automatisierung und einfache Integration verschiedener Sicherheitsgeräte wie Steuerungen, Sensoren und Aktoren ermöglichen. Die Diagnosemöglichkeiten werden verbessert, da durchgängige Konfiguration und verbesserte Diagnosefunktionen zur schnellen Fehlererkennung und -behebung beitragen. Die Reduzierung der Verkabelung und die einfache Integration führen zu geringeren Installations- und Wartungskosten, was die Kosteneffizienz erhöht.

Darüber hinaus kann in einer weiteren Ausführungsform das Sensormodul einen Sensor umfassen, welcher ein Kameramodul mit integrierter Beleuchtungseinheit umfasst, welches dazu ausgelegt ist, einen Data Matrix Code (DMC) zu erfassen, wobei der Sensor ein Mehrfarben-Beleuchtungssystem umfassen kann, das dazu ausgelegt ist, mehrfarbige Codes auf einem Trägermedium sichtbar und lesbar zu machen, und/oder wobei der Sensor einen Algorithmus umfassen kann, der dazu ausgelegt ist, die Plausibilität der erfassten Daten zu überprüfen.

Die Integration eines Kameramoduls mit integrierter Beleuchtungseinheit in das Sensormodul ermöglicht eine kompakte, robuste und kalibrierungsarme Bauweise, die insbesondere in industriellen Umgebungen mit begrenztem Bauraum vorteilhaft ist. Durch das optional vorgesehene Mehrfarben-Beleuchtungssystem kann die Vorrichtung auch mehrfarbige oder farbcodierte DMCs erfassen, was die Einsatzmöglichkeiten auf komplexere Trägermaterialien und variable Farbkontraste erweitert. Dies ist insbesondere bei Anwendungen mit wechselnden Umgebungslichtbedingungen oder farblich codierten Prozesskennzeichnungen von Vorteil. Der Plausibilitätsalgorithmus kann die Datensicherheit und Lesegenauigkeit erhöhen, indem er fehlerhafte oder unvollständige DMC-Erfassungen automatisch erkennt und gegebenenfalls verwerfen oder kennzeichnen kann. Dadurch wird die Gesamtzuverlässigkeit des Systems gesteigert und der manuelle Prüfaufwand reduziert.

Um die Position eines Data Matrix Codes (DMC) relativ zu einem Bezugspunkt präzise zu bestimmen, wird ferner vorgeschlagen, dass die Vielzahl von Data Matrix Codes auf dem Längsverstellelement so angeordnet sein kann, dass die darin jeweils enthaltenen Daten in einer sequentiellen Reihenfolge gespeichert sind und/oder in einer numerisch aufsteigenden Reihenfolge gespeichert sind, wobei die numerisch kleinsten Daten am verstellbaren Ende des Längsverstellelementes angeordnet sind.

Bei einer sequentiellen Anordnung einer Vielzahl von Data Matrix Codes (DMCs) auf einem Längsverstellelement unterliegen die darin enthaltenen Daten einer logischen Reihenfolge. Diese logische Reihenfolge ermöglicht es, spezifische Informationen wie beispielsweise die Höhe oder andere relevante Parameter hinterlegen und in der Folge durch die Vorrichtung präzise zu bestimmen.

Durch die strukturierte Speicherung der Daten kann das System eine klare und nachvollziehbare Ordnung erkennen, was die Effizienz und Genauigkeit der Datenverarbeitung erheblich verbessert.

Darüber hinaus erleichtert diese Anordnung die kontinuierliche Überwachung und Anpassung der Position, da die Daten in einer logischen Abfolge vorliegen. Dies ist besonders in dynamischen Umgebungen von Vorteil, in denen schnelle und präzise Anpassungen erforderlich sind.

Die sequentielle Anordnung der DMCs trägt somit nicht nur zur Verbesserung der Messgenauigkeit bei, sondern auch zur Optimierung der Systemleistung und -zuverlässigkeit. Die aus den DMCs entnommenen Daten können somit effizient genutzt werden, um wichtige Informationen, wie zum Beispiel die Ausfuhrhöhe einer Hubeinrichtung, zu ermitteln und entsprechend darauf zu reagieren.

Zur präzisen und gleichzeitig einfachen Bestimmung der Position kann die Vielzahl von Data Matrix Codes auf dem Längsverstellelement der Vorrichtung zur Bestimmung einer Position eines Data Matrix Codes (DMC) so angeordnet sein, dass die darin jeweils enthaltenen Daten in einer numerisch aufsteigenden Reihenfolge gespeichert sind, wobei die numerisch kleinsten Daten am verstellbaren Ende des Längsverstellelementes angeordnet sein können.

Die numerische Reihenfolge ermöglicht eine sehr genaue Bestimmung von Positionen oder Höhen, da die Daten in einer logischen und systematischen Abfolge vorliegen. Diese Struktur erleichtert präzise Messungen und reduziert die Wahrscheinlichkeit von Fehlern. Jede Zahl repräsentiert eine spezifische Position oder Höhe, was eine klare Zuordnung und Nachverfolgung ermöglicht.

Ferner kann darüber nachgedacht werden, dass die Vorrichtung zur Bestimmung einer Position eines Data Matrix Codes (DMC) relativ zu einem Bezugspunkt einen Positionssensor umfassen kann, der dazu ausgelegt sein kann, einen Positionssensor, dazu ausgelegt, die Position des DMC, welcher dem Sensormodul zugewandt und von diesem auslesbar ist, relativ zu dem Bezugspunkt redundant zu erfassen.

Durch die Implementierung von Redundanz in einem Positionssensorsystem wird die Funktionsfähigkeit des Systems auch bei einem Sensorausfall gewährleistet. Ein zweiter Sensor übernimmt in diesem Fall die Positionserfassung, wodurch das Risiko von Fehlfunktionen reduziert und die Betriebssicherheit erhöht wird. Dies ist besonders relevant in sicherheitskritischen Anwendungen.

Darüber hinaus ermöglicht die Redundanz eine kontinuierliche Überprüfung und Validierung der Positionsdaten, was die Genauigkeit und Zuverlässigkeit der Messungen verbessert.

Hierbei kann der Positionssensor der Vorrichtung zur Bestimmung einer Position eines Data Matrix Codes (DMC) relativ zu einem Bezugspunkt ein Drehgeber sein.

Ein Positionssensor ermöglicht eine hohe Präzision bei der redundanten Erfassung von Positionsdaten.

Darüber hinaus sind Drehgeber robuster und langlebiger als andere Sensortypen, die für den redundanten Einsatz geeignet wären.

Ein weiterer Vorteil ist die kompakte Bauweise von Drehgebern. Sie sind in der Regel klein und leicht, was ihre Integration in bestehende Systeme erleichtert. Diese Kompaktheit ermöglicht es, Platz zu sparen und das Design von Maschinen und Geräten zu optimieren.

Ferner betrifft die Erfindung eine Hubeinrichtung umfassend eine Vorrichtung zur Bestimmung einer Position eines Data Matrix Codes (DMC) relativ zu einem Bezugspunkt.

Mit einer Hubeinrichtung, die eine Vorrichtung zur Bestimmung einer Position eines Data Matrix Codes (DMC) relativ zu einem Bezugspunkt umfasst, können durch die präzise Bestimmung der Position die Einrichtung sicherer gefahren werden, bzw. Lasten genau gehoben und platziert werden, was die Sicherheit erheblich erhöht und Unfälle vermeidet.

Zum Beispiel kann verhindert werden, dass die Hubeinrichtung zu tief abfährt und ein Mensch oder ein Gegenstand darunter eingeklemmt wird. Zudem wird der Arbeitsablauf effizienter, da weniger Korrekturen und Anpassungen notwendig sind.

Um eine flexible Anpassung der Hubeinrichtung an verschiedene Anforderungen und Einsatzbedingungen zu erreichen, kann in einer Ausführungsform der Erfindung in der Hubeinrichtung umfassend eine Vorrichtung zur Bestimmung einer Position eines Data Matrix Codes (DMC) relativ zu einem Bezugspunkt, die Längsverstelleinrichtung an einem Teil der Hubeinrichtung angeordnet sein und das Längsverstellelement mit einem anderen Teil des Hubeinrichtung, welcher relativ zu dem einen Teil der Hubeinrichtung verschiebbar gelagert ist, verbunden sein.

In einer Alternative dazu kann darüber nachgedacht werden, dass in der Hubeinrichtung umfassend eine Vorrichtung zur Bestimmung einer Position eines Data Matrix Codes (DMC) relativ zu einem Bezugspunkt die Längsverstelleinrichtung an einem Teil der Hubeinrichtung, welcher relativ zu einem anderen Teil der Hubeinrichtung verschiebbar gelagert ist, angeordnet sein kann, und das Längsverstellelement mit dem anderen Teil des Hubeinrichtung verbunden sein kann.

Diese Anordnung ermöglicht eine flexible Anpassung der Hubeinrichtung an verschiedene Anforderungen und Einsatzbedingungen.

Des Weiteren betrifft die Erfindung ein Verfahren zur Bestimmung einer Position eines Data Matrix Codes (DMC) relativ zu einem Bezugspunkt, umfassend die folgenden Schritte:
- Bereitstellen einer Vorrichtung zur Bestimmung einer Position eines Data Matrix Codes (DMC) relativ zu einem Bezugspunkt, umfassend
   - ein Sensormodul, eingerichetet zum Erfassen von Daten eines DMC in dessem Sichtfeld,
   - eine Verarbeitungseinheit eingerichtet zur Bestimmung einer Position des DMC relativ zu dem Bezugspunkt,
   - eine Kommunikationsschnittstelle eingerichtet zum Übertragen von Daten des DMC und/oder der bestimmten Position des DMC an eine externe Einheit,
   - ein Positionsbestimmungssystem, umfassend
      - den Bezugspunkt,
      - eine Längsverstelleinrichtung mit einem Längsverstellelement, die dazu eingerichtet ist, eine Bewegung entlang einer Bahn mittels des Längsverstellelements, ausgehend von dem Bezugspunkt, vorzugeben, und
      - eine Vielzahl von DMC, die entlang des Längsverstellelements so angeordnet sind, dass sie bei Bewegung des Längsverstellelements jeweils in das Sichtfeld des Sensormoduls gelangen können und dort auslesbar sind,
         wobei das Sensormodul und ein bewegbares Ende des Längsverstellelementes entlang derselben Bewegungsbahn bewegbar sind und sich dadurch stets in derselben relativen Position zueinander befinden,
   - Auslesen der Daten des DMC durch das Sensormodul, wenn dieser sich in dessem Sichtfeld befindet,
   - Bestimmen einer Position des DMC relativ zu dem Bezugspunkt durch die Verarbeitungseinheit aus den Daten des DMC,
   - Übertragen der Daten des DMC und/oder der Position des DMC von der Verarbeitungseinheit an eine externe Einheit.

Darüber hinaus kann das, was in Bezug auf das Verfahren gesagt wurde, analog auf die Vorrichtung angewendet werden und muss daher dort nicht wiederholt werden. Ausführungsformen und Details der Vorrichtung haben eine Entsprechung in dem Verfahren und umgekehrt.

Es sei im Zusammenhang mit dem erfindungsgemäßen Verfahren auch darauf hingewiesen, dass die angegebenen Schritte nicht zwangsläufig in der angegebenen Reihenfolge durchgeführt werden müssen. Die angegebenen Schritte können in jeder anderen geeigneten Reihenfolge oder auch gleichzeitig durchgeführt werden.

Allerdings kann die oben angegebene Reihenfolge für bestimmte Ausführungsformen des erfindungsgemäßen Verfahrens vorteilhaft sein.

Es wird zudem von einem Fachmann anerkannt werden, dass ein Merkmal, eine Ausführungsform, eine Wirkung oder ein Vorteil, wie hier in Verbindung mit der erfinderischen Vorrichtung beschrieben ist, auch ein Merkmal, eine Ausführungsform, eine Wirkung oder ein Vorteil des erfinderischen Verfahrens sein kann, bzw. umgekehrt.

In einer Ausführungsform der Erfindung kann in dem Verfahren zur Bestimmung einer Position eines Data Matrix Codes (DMC) relativ zu einem Bezugspunkt die Verarbeitungseinheit dazu ausgelegt sein, in Echtzeit eine Position des Data Matrix Codes (DMC) relativ zu einem Bezugspunkt zu bestimmen, an die Kommunikationsschnittstelle weiterzuleiten, sowie mittels der Kommunikationsschnittstelle die Position des Data Matrix Codes (DMC) relativ zu einem Bezugspunkt an eine externe Steuer- und/oder Überwachungseinheit zu übertragen.

Durch die Echtzeit-Positionsbestimmung und -übertragung können potenzielle Gefahren schneller erkannt und vermieden werden. Die kontinuierliche Überwachung der Position des Data Matrix Codes (DMC) ermöglicht eine präzisere Kontrolle und trägt dazu bei, gefährliche Situationen frühzeitig zu erkennen.

Die Möglichkeit, Positionsdaten in Echtzeit zu übertragen, erlaubt es externen Steuer- und Überwachungseinheiten, sofortige Maßnahmen zu ergreifen, um Unfälle zu verhindern. Darüber hinaus kann die Integration in externe Systeme automatisierte Warnungen und Sicherheitsmaßnahmen auslösen, um Unfälle zu vermeiden. In komplexen Umgebungen verbessert die genaue Positionsbestimmung die Koordination zwischen verschiedenen Einheiten und reduziert so das Risiko von Unfällen.

In der vorliegenden Beschreibung und den beigefügten Ansprüchen wird, sofern der Kontext nichts anderes erfordert, das Wort "umfassen" und Variationen wie "umfasst" und "umfassend" so verstanden, dass sie die Einbeziehung eines angegebenen Elements, einer ganzen Zahl oder eines Schritts oder einer Gruppe von Elementen, ganzen Zahlen oder Schritten implizieren, jedoch nicht den Ausschluss eines anderen Elements, einer anderen ganzen Zahl oder eines anderen Schritts oder einer anderen Gruppe von Elementen, ganzen Zahlen oder Schritten, obwohl in einigen Ausführungsformen solche anderen Elemente, ganze Zahlen oder Schritte oder Gruppen von Elementen, ganzen Zahlen oder Schritten ausgeschlossen sein können, d.h. der Gegenstand besteht in der Einbeziehung eines angegebenen Elements, einer ganzen Zahl oder eines Schritts oder einer Gruppe von Elementen, ganzen Zahlen oder Schritten.

Die Begriffe "ein" und "eine" und "das" und ähnliche Referenzen, die im Kontext der Beschreibung der Erfindung (insbesondere im Kontext der Ansprüche) verwendet werden, sind so auszulegen, dass sie sowohl den Singular als auch den Plural abdecken, sofern hierin nicht anders angegeben oder durch den Kontext eindeutig widersprochen. Die Angabe von Wertebereichen dient lediglich als Kurzform, um sich einzeln auf jeden einzelnen Wert innerhalb des Bereichs zu beziehen. Sofern hierin nicht anders angegeben, ist jeder einzelne Wert in die Spezifikation aufgenommen, als ob er hierin einzeln aufgeführt wäre.

Innerhalb der vorliegenden Anmeldung beziehen sich Begriffe wie "seitlich" oder "lateral", "hinten", "vorne", "oben", "unten", "Boden", "gegenüber", "innen", "außen" oder dergleichen, die die Position eines ersten Objekts relativ zu einem anderen Objekt beschreiben, vorzugsweise auf die relative Position eines jeweiligen Teils oder Objekts in Bezug auf seine Position, wenn es vollständig für seinen vorgesehenen Gebrauch montiert ist.

### Kurzbeschreibung der Figuren

Die vorliegende Erfindung wird im Folgenden ausführlicher erläutert unter Bezugnahme auf die Zeichnungen, aus denen weitere Merkmale, Ausführungsformen und Vorteile entnommen werden können. In den in den Abbildungen gezeigten Ausführungsformen werden Elemente, die ähnliche oder identische Funktionen haben, mit gleichen Bezugszeichen versehen. Es wird darauf hingewiesen, dass die Abbildungen möglicherweise nicht maßstabsgetreu zueinander sind.

Dabei zeigt:
- FIG. 1: zeigt in einer Ausführungsform der Erfindung eine Vorrichtung zur Bestimmung einer Position eines Data Matrix Codes (DMC) relativ zu einem Bezugspunkt,
- FIG. 2: zeigt in einer Ausführungsform der Erfindung ein Längsverstellelement mit aufgebrachten DMCs, und
- FIG. 3: zeigt in einer Ausführungsform der Erfindung eine Hebeeinrichtung mit einer Längsverstelleinrichtung und einem Sensormodul.

### Detaillierte Beschreibung

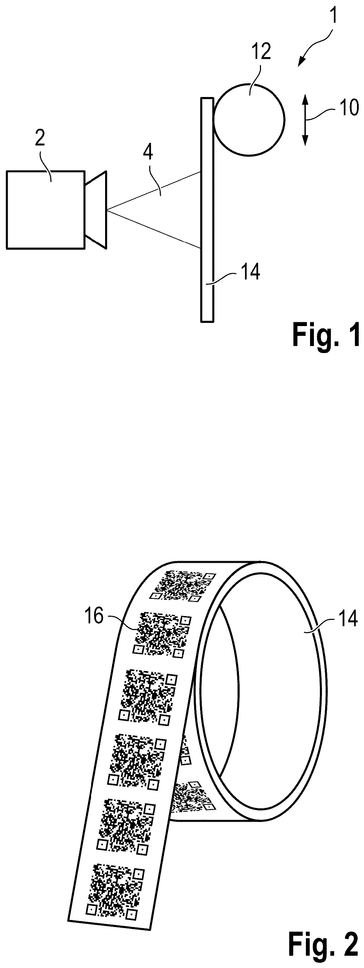

FIG. 1 zeigt eine schematische Darstellung einer Vorrichtung zur Bestimmung einer Position eines Referenzpunkts relativ zu einem Bezugspunkt 1.

Diese Vorrichtung umfasst ein Sensormodul 2, eingerichtet zum Auslesen von Daten aus einem Data Matrix Code (DMC) 16 in einem Sichtfeld des Sensormoduls 2, eine Verarbeitungseinheit (nicht gezeigt), die eingerichtet ist, um die erfassten Daten zu analysieren und daraus eine Position eines DMC 16 relativ zu einem Bezugspunkt 8 zu bestimmen, eine Kommunikationsschnittstelle (nicht gezeigt), die dazu eingerichtet ist, Daten und/oder die bestimmte Position eines DMC 16 von dem Sensormodul 2 und/ oder der Verarbeitungseinheit an eine externe Steuer- und/oder Überwachungseinheit (nicht gezeigt) zu übertragen und ein Positionsbestimmungssystem 12.

Das Positionsbestimmungssystem 12 umfasst einen Bezugspunkt 8, der dazu ausgelegt ist, dass die Position eines DMC 16 relativ zu diesem bestimmt wird, und eine Längsverstelleinrichtung 10, die ein Längsverstellelement 14 umfasst, und die dazu ausgelegt ist, durch dieses eine lineare oder kurvilineare Bewegung und dadurch eine Bewegungsbahn ausgehend von dem Bezugspunkt 8 vorzugeben, sowie eine Vielzahl von DMC 16, die auf dem Längsverstellelement 14 angeordnet ist, so dass jeder dem Sensormodul 2 mindestens dann zugewandt und von diesem auslesbar ist, wenn er sich in dessen Sichtfeld 4 befindet.

Ein Detail der Längsverstelleinrichtung 10, die eine lineare oder kurvilineare Bewegung vorgibt, ist in FIG. 2 abgebildet. Hierbei handelt es sich um das Längsverstellelement 14 mit einer Vielzahl darauf aufgebrachter DMC 16.

Diese Vielzahl von DMC 16 ist auf dem Längsverstellelement 14 derart angeordnet, sodass jeder DMC 16 dem Sensormodul 2 mindestens dann zugewandt und von diesem auslesbar ist, wenn er sich im Sichtfeld 4 des Sensormoduls 2 befindet.

Das Sensormodul 2 und das bewegbare Ende des Längsverstellelementes 14 sind wiederum so angeordnet, dass sie entlang derselben Bewegungsbahn bewegbar sind und sich dadurch stets in derselben relativen Position zueinander befinden.

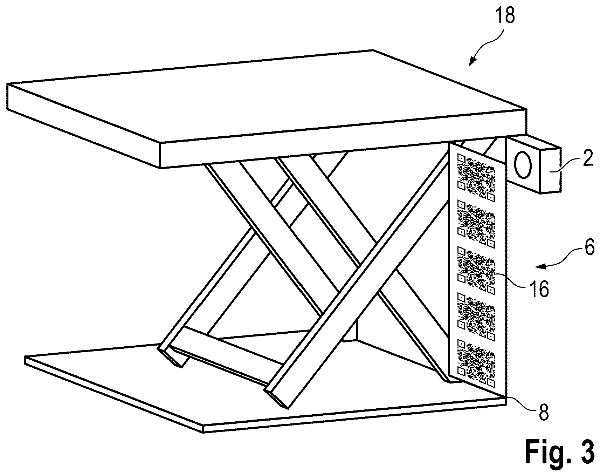

Dies kann auch aus der FIG. 3 ersehen werden, die exemplarisch einen Hubtisch 18 zeigt, an dessen oberen beweglichen Teil (dem Tisch) das Sensormodul 2 und das bewegbare Ende der Längsverstelleinrichtung 10, bzw. des Längsverstellelementes 14 angebracht sind (oder genau andersrum, wobei dann auch das Sensormodul 2 an dem unbeweglichen Teil des Hubtisches 18 angeordnet ist)3%I urch das Ausfahren oder Einfahren des Hubtisches 18 kann das Ausfahren oder Einfahren des Längsverstellelementes 14 bewirkt werden. Diese Bewegung führt dazu, dass ein DMC 16 nach dem anderen am Sensorelement 2 bzw. dessen Sichtfeld 4 vorbeigeführt und ausgelesen wird. Der Bezugspunkt 8 wird hier durch eine Ecke der unteren Auflagefläche des Hubtisches 18 gebildet.

Das Sensormodul 2 umfasst einen Sensor mit einem Kameramodul und einer integrierten Beleuchtungseinheit, die dazu ausgelegt ist, einen DMC 16 zu erfassen. Der Sensor verfügt über ein Mehrfarben-Beleuchtungssystem, das mehrfarbige Codes auf einem Trägermedium sichtbar und lesbar macht, sowie einen Algorithmus zur Überprüfung der Plausibilität der erfassten Daten.

Die erfassten Daten des DMC 16 werden durch das Sensormodul 2 ausgelesen und an die Verarbeitungseinheit weitergeleitet. Die Verarbeitungseinheit analysiert die Daten und bestimmt daraus die Position des DMC 16 relativ zu dem Bezugspunkt 8. Diese Position wird dann über die Kommunikationsschnittstelle an eine externe Steuer- und/oder Überwachungseinheit übertragen:
Dies geschieht beispielsweise durch Ermittlung der Höhe des DMCs 16, die in den Daten des DMCs 16 hinterlegt sein kann, und Abzug der Höhe des Bezugspunktes 8, sodass die Ausfahrhöhe des Hubtisches 18 berechnet wird.

Dies kann genutzt werden, um ein Warnsignal zu erzeugen, sobald der Hubtisch 18 eine Mindestausfahrhöhe erreicht, die zu halten notwendig ist, um Menschen oder Gegenstände unter diesem nicht zu gefährden. Darüber hinaus gibt jeder DMC 16 eine genaue Position an, was die Präzision der Positionsbestimmung erheblich erhöht.

Durch die Vielzahl der DMC 16 stehen mehrere Referenzpunkte zur Verfügung, was die Zuverlässigkeit und Genauigkeit der Messungen signifikant verbessert.

Die Längsverstelleinrichtung 10 kann verschiedene Materialien umfassen, um den spezifischen Anforderungen und Einsatzbedingungen gerecht zu werden. Zu den möglichen Materialien gehören Metall, das hohe Festigkeit und Haltbarkeit bietet und ideal für industrielle Anwendungen ist, Kunststoff, der leicht und kostengünstig ist und sich für Anwendungen eignet, bei denen Gewicht eine Rolle spielt, sowie Gummi, das flexibel und widerstandsfähig gegen Verschleiß ist und sich gut für Anwendungen mit hoher Beanspruchung eignet.

Für diese Anwendung eignen sich bestimmte Metalle und Kunststoffe, die den Anforderungen an Festigkeit, Flexibilität und Haltbarkeit entsprechen. Edelstahl ist ein geeignetes Metall, da es korrosionsbeständig und langlebig ist. Alternativ kann Aluminium verwendet werden, da es leicht und stabil ist, was das Gewicht der Vorrichtung reduziert.

Auch Kunststoffe wie Polyester oder Nylon sind geeignet. Polyester zeichnet sich durch hohe Zugfestigkeit und Dehnungsbeständigkeit aus, während Nylon für seine Belastbarkeit und Flexibilität bekannt ist. Beide Materialien sind reißfest, abriebfest und beständig gegen Chemikalien und UV-Strahlung, was ihre Lebensdauer verlängert.

Die Längsverstelleinrichtung 10 kann ferner ein Gurtsystem sein und einen Gurt als Längsverstellelement 14 umfassen. %Das Gurtsystem kann darüber hinaus eine Aufrollmechanik aufweisen, die eine Trommel oder einen Spulenkern umfassen kann, auf dem der Gurt aufgewickelt ist. Eine Abwickelvorrichtung kann des Weiteren die kontrollierte Abwicklung des Gurtes garantieren. Ferner kann ein Sperrmechanismus oder eine Rückhaltevorrichtung vorgesehen sein, die den Gurt im Falle einer plötzlichen Bewegung blockiert, um die Sicherheit zu gewährleisten.

Das Gurtsystem kann zusätzlich Führungselemente und Umlenkrollen aufweisen, welche die Führung des Gurtes optimieren und dessen Spannung regulieren. Schließlich können Verankerungspunkte oder Befestigungsmechanismen zum Gurtsystem gehören, die sicherstellen, dass das System fest an der Abwickelvorrichtung oder einer anderen Haltestruktur fixiert ist.

Die Vielzahl von DMC 16 kann auf das Längsverstellelement 14 aufgedruckt, aufgelasert oder aufgeklebt sein, je nach den Anforderungen an Haltbarkeit und Lesbarkeit.

Die Vorrichtung 1 kann eine Sicherheitsstufe aufweisen, die durch eine Sicherheitsintegritätsstufe (SIL) oder ein Performance Level (PL) gekennzeichnet ist.

Durch die angegebene Sicherheitsstufe erreicht die Vorrichtung 1 sowohl die Sicherheitsintegritätsstufe SIL 3 als auch das Performance Level PLe. Eine Sicherheitsintegritätsstufe (SIL) mit einer Wahrscheinlichkeit eines gefährlichen Ausfalls pro Stunde (*PFH_{D}*) zwischen 10⁻⁷ und 10⁻⁸ erfüllt die Anforderungen für SIL 3 gemäß der Norm IEC 61508, was bedeutet, dass das System eine sehr hohe Zuverlässigkeit in sicherheitskritischen Anwendungen bietet. Gleichzeitig wird ein Performance Level (PL) mit einer Wahrscheinlichkeit eines gefährlichen Ausfalls pro Stunde (*PFH_{D}*) im gleichen Bereich zwischen 10⁻⁷ und 10⁻⁸ erreicht, was den höchsten Sicherheitsgrad PLe gemäß der Norm ISO 13849-1 darstellt..

Durch das Erreichen der Sicherheitsintegritätsstufe SIL 3 und/oder des Performance Levels PLe wird eine äußerst geringe Wahrscheinlichkeit eines gefährlichen Ausfalls, mit einem *PFH_{D}* zwischen 10⁻⁷ und 10⁻⁸ pro Stunde sichergestellt. Dies bedeutet, dass die Vorrichtung 1 in der Lage ist, auch unter extremen Bedingungen zuverlässig zu funktionieren und potenzielle Risiken für Mensch und Maschine zu minimieren.

Die Verarbeitungseinheit kann sichere Übertragungsprotokolle wie Fail Safe over EtherCAT (FSoE) und/oder PROFIsafe, um eine sichere und zuverlässige Datenübertragung zu gewährleisten, unterstützen.

Ein Positionssensor kann die Position des DMC 16 relativ zu dem Bezugspunkt 8 redundant erfassen, wobei der Positionssensor ein Drehgeber sein kann. Die Erfindung umfasst auch eine Hubeinrichtung, die die beschriebene Vorrichtung 1 zur Positionsbestimmung eines DMC 16 relativ zu einem Bezugspunkt 8 integriert.

Die Daten, die in den DMC 16 gespeichert sind, können in einer sequentiellen und insbesondere numerischen Reihenfolge gespeichert sein. Hierbei können die numerisch kleinsten Daten am verstellbaren Ende des Längsverstellelementes 14 angeordnet sein.

Das Verfahren zur Bestimmung einer Position eines DMC 16 relativ zu einem Bezugspunkt 8 umfasst neben des Bereitstellens einer Vorrichtung 1 zur Bestimmung einer Position eines Data Matrix Codes (DMC) 16 relativ zu einem Bezugspunkt 8, die Schritte des Auslesens der Daten des DMC 16 durch das Sensormodul 2, wenn dieser sich in dessen Sichtfeld 4 befindet, des Analysierens der Daten des DMC 16 durch die Verarbeitungseinheit, des Bestimmens einer Position des DMC 16 relativ zu dem Bezugspunkt 8 durch die Verarbeitungseinheit aus den Daten des DMC 16 und des Übertragens der Daten des DMC 16 und/oder der Position des DMC 16 von der Verarbeitungseinheit an eine externe Steuer- und/oder Überwachungseinheit durch eine Kommunikationsschnittstelle.

Ferner ist die Verarbeitungseinheit dazu ausgelegt, in Echtzeit eine Position des Data Matrix Codes (DMC) 16 relativ zu einem Bezugspunkt 8 zu bestimmen, an die Kommunikationsschnittstelle weiterzuleiten, sowie mittels der Kommunikationsschnittstelle die Position des Data Matrix Codes (DMC) 16 relativ zu einem Bezugspunkt 8 an eine externe Steuer- und/oder Überwachungseinheit zu übertragen.

### Referenzzeichenliste

| | |
|---|---|
| Vorrichtung zur Bestimmung einer Position eines Referenzpunkts relativ zu einem Bezugspunkt | 1 |
| Sensormodul | 2 |
| Sichtfeld | 4 |
| Bezugspunkt | 8 |
| Längsverstelleinrichtung | 10 |
| Positionsbestimmungssystem | 12 |
| Längsverstellelement | 14 |
| Data Matrix Code (DMC) | 16 |
| Hubtisch | 18 |

## Patentansprüche

1. Vorrichtung (1) zur Bestimmung einer Position eines Data Matrix Codes (DMC) (16) relativ zu einem Bezugspunkt (8), umfassend
• ein Sensormodul (2), eingerichtet zum Erfassen von Daten eines DMC (16) in dessen Sichtfeld (4),
• eine Verarbeitungseinheit eingerichtet zur Bestimmung einer Position des DMC (16) relativ zu dem Bezugspunkt (8),
• eine Kommunikationsschnittstelle eingerichtet zum Übertragen von Daten des DMC (16) und/oder der bestimmten Position des DMC (16) an eine externe Einheit,
• ein Positionsbestimmungssystem (12), umfassend
∘ den Bezugspunkt (8),
∘ eine Längsverstelleinrichtung (10) mit einem Längsverstellelement (14), die dazu eingerichtet ist, eine Bewegung entlang einer Bahn mittels des Längsverstellelements (14), ausgehend von dem Bezugspunkt (8), vorzugeben, und
∘ eine Vielzahl von DMC (16), die entlang des Längsverstellelements (14) so angeordnet sind, dass sie bei Bewegung des Längsverstellelements (14) jeweils in das Sichtfeld (4) des Sensormoduls (2) gelangen können und dort auslesbar sind,
wobei das Sensormodul (2) und ein bewegbares Ende des Längsverstellelementes (14) entlang derselben Bewegungsbahn bewegbar sind und sich dadurch stets in derselben relativen Position zueinander befinden.

2. Vorrichtung (1) zur Bestimmung einer Position eines Data Matrix Codes (DMC) (16) relativ zu einem Bezugspunkt (8) nach Anspruch 1, wobei die Vorrichtung (1) eine Sicherheitsstufe aufweist, die durch eine Sicherheitsintegritätsstufe (SIL) mit einer Wahrscheinlichkeit eines gefährlichen Ausfalls pro Stunde (*PFH_{D}*) zwischen 10⁻⁷ und 10⁻⁸ gekennzeichnet ist und/oder die durch ein Performance Level (PL) mit einer Wahrscheinlichkeit eines gefährlichen Ausfalls pro Stunde (*PFH_{D}*) zwischen 10⁻⁷ und 10⁻⁸ gekennzeichnet ist.

3. Vorrichtung (1) zur Bestimmung einer Position eines Data Matrix Codes (DMC) (16) relativ zu einem Bezugspunkt (8) nach Anspruch 1 oder 2, wobei die Längsverstelleinrichtung (10) ein Gurtsystem ist, welches als Längsverstellelement (14) einen Gurt umfasst.

4. Vorrichtung (1) zur Bestimmung einer Position eines Data Matrix Codes (DMC) (16) relativ zu einem Bezugspunkt (8) nach einem der Ansprüche 1 bis 3,
wobei die Längsverstelleinrichtung (10) mit einem Längsverstellelement (14) dazu eingerichtet ist, eine Bewegung entlang einer kurvilinearen und/ oder linearen Bahn mittels des Längsverstellelements (14), ausgehend von dem Bezugspunkt (8), vorzugeben.

5. Vorrichtung (1) zur Bestimmung einer Position eines Data Matrix Codes (DMC) (16) relativ zu einem Bezugspunkt (8) nach einem der Ansprüche 1 bis 4, wobei die Vielzahl von Data Matrix Codes (16) auf das Längsverstellelement (14) aufgedruckt oder aufgelasert oder aufgeklebt ist.

6. Vorrichtung (1) zur Bestimmung einer Position eines Data Matrix Codes (DMC) (16) relativ zu einem Bezugspunkt (8) nach einem der Ansprüche 1 bis 5, wobei die Verarbeitungseinheit ein sicheres Übertragungsprotokoll wie Fail Safe over EtherCAT (FSoE) und/ oder PROFIsafe unterstützt.

7. Vorrichtung (1) zur Bestimmung einer Position eines Data Matrix Codes (DMC) (16) relativ zu einem Bezugspunkt (8) nach einem der Ansprüche 1 bis 6,
wobei das Sensormodul (2) einen Sensor umfasst, welcher ein Kameramodul mit integrierter Beleuchtungseinheit umfasst, welches dazu ausgelegt ist, einen Data Matrix Code (DMC) (16) zu erfassen,
- wobei der Sensor ein Mehrfarben-Beleuchtungssystem umfasst, das dazu ausgelegt ist, mehrfarbige Codes auf einem Trägermedium sichtbar und lesbar zu machen, und/oder
- wobei der Sensor einen Algorithmus umfasst, der dazu ausgelegt ist, die Plausibilität der erfassten Daten zu überprüfen.

8. Vorrichtung (1) zur Bestimmung einer Position eines Data Matrix Codes (DMC) (16) relativ zu einem Bezugspunkt (8) nach einem der Ansprüche 1 bis 7, wobei die Vielzahl von Data Matrix Codes (16) auf dem Längsverstellelement (14) so angeordnet ist, dass die darin jeweils enthaltenen Daten in einer sequentiellen Reihenfolge und/oder in einer numerisch aufsteigenden Reihenfolge gespeichert sind, wobei die numerisch kleinsten Daten am verstellbaren Ende des Längsverstellelementes (14) angeordnet sind.

9. Vorrichtung (1) zur Bestimmung einer Position eines Data Matrix Codes (DMC) (16) relativ zu einem Bezugspunkt (8) nach einem der Ansprüche 1 bis 8, ferner umfassend einen Positionssensor, dazu ausgelegt, die Position des DMC (16), welcher dem Sensormodul (2) zugewandt und von diesem auslesbar ist, relativ zu dem Bezugspunkt (8) redundant zu erfassen.

10. Vorrichtung (1) zur Bestimmung einer Position eines Data Matrix Codes (DMC) (16) relativ zu einem Bezugspunkt (8) nach Anspruch 9, wobei der Positionssensor ein Drehgeber ist.

11. Hubeinrichtung (18) umfassend eine Vorrichtung (1) zur Bestimmung einer Position eines Data Matrix Codes (DMC) (16) relativ zu einem Bezugspunkt (8) nach einem der Ansprüche 1 bis 10.

12. Hubeinrichtung (18) umfassend eine Vorrichtung (1) zur Bestimmung einer Position eines Data Matrix Codes (DMC) (16) relativ zu einem Bezugspunkt (8) nach Anspruch 11, wobei die Längsverstelleinrichtung (10) an einem Teil der Hubeinrichtung (18) angeordnet ist und das Längsverstellelement (14) mit einem anderen Teil der Hubeinrichtung (18), welcher relativ zu dem einen Teil der Hubeinrichtung (18) verschiebbar gelagert ist, verbunden ist.

13. Hubeinrichtung (18) umfassend eine Vorrichtung (1) zur Bestimmung einer Position eines Data Matrix Codes (DMC) (16) relativ zu einem Bezugspunkt (8) nach Anspruch 11, wobei die Längsverstelleinrichtung (10) an einem Teil der Hubeinrichtung (18), welcher relativ zu einem anderen Teil der Hubeinrichtung (18) verschiebbar gelagert ist, angeordnet ist, und das Längsverstellelement (14) mit dem anderen Teil des Hubeinrichtung (18) verbunden ist.

14. Verfahren zur Bestimmung einer Position eines Data Matrix Codes (DMC) (16) relativ zu einem Bezugspunkt (8), umfassend die folgenden Schritte:
- Bereitstellen einer Vorrichtung (1) zur Bestimmung einer Position eines Data Matrix Codes (DMC) (16) relativ zu einem Bezugspunkt (8), umfassend
- ein Sensormodul (2), eingerichtet zum Erfassen von Daten eines DMC (16) in dessen Sichtfeld (4),
- eine Verarbeitungseinheit eingerichtet zur Bestimmung einer Position des DMC (16) relativ zu dem Bezugspunkt (8),
- eine Kommunikationsschnittstelle eingerichtet zum Übertragen von Daten des DMC (16) und/oder der bestimmten Position des DMC (16) an eine externe Einheit,
- ein Positionsbestimmungssystem (12), umfassend
- den Bezugspunkt (8),
- eine Längsverstelleinrichtung (10) mit einem Längsverstellelement (14), die dazu eingerichtet ist, eine Bewegung entlang einer Bahn mittels des Längsverstellelements (14), ausgehend von dem Bezugspunkt (8), vorzugeben, und
- eine Vielzahl von DMC (16), die entlang des Längsverstellelements (14) so angeordnet sind, dass sie bei Bewegung des Längsverstellelements (14) jeweils in das Sichtfeld (4) des Sensormoduls (2) gelangen können und dort auslesbar sind,
wobei das Sensormodul (2) und ein bewegbares Ende des Längsverstellelementes (14) entlang derselben Bewegungsbahn bewegbar sind und sich dadurch stets in derselben relativen Position zueinander befinden,
- Auslesen der Daten des DMC (16) durch das Sensormodul (2), wenn dieser sich in dessem Sichtfeld (4) befindet,
- Bestimmen einer Position des DMC (16) relativ zu dem Bezugspunkt (8) durch die Verarbeitungseinheit aus den Daten des DMC (16),
- Übertragen der Daten des DMC (16) und/oder der Position des DMC (16) von der Verarbeitungseinheit an eine externe Einheit.

15. Verfahren zur Bestimmung einer Position eines Data Matrix Codes (DMC) (16) relativ zu einem Bezugspunkt (8) nach Anspruch 14,
wobei die Verarbeitungseinheit dazu ausgelegt ist, in Echtzeit eine Position des Data Matrix Codes (DMC) (16) relativ zu einem Bezugspunkt (8) zu bestimmen, an die Kommunikationsschnittstelle weiterzuleiten, sowie mittels der Kommunikationsschnittstelle die Position des Data Matrix Codes (DMC) (16) relativ zu einem Bezugspunkt (8) an die externe Elnheit zu übertragen.
